Europäisches Patentamt

European Patent Office

Office européen des brevets

(11) Veröffentlichungsnummer: **0 307 643 B1**

# (12) EUROPÄISCHE PATENTSCHRIFT

(45) Veröffentlichungstag der Patentschrift:
06.03.91 Patentblatt 91/10

(51) Int. Cl.$^5$: **B21D 39/20**

(21) Anmeldenummer: **88113424.1**

(22) Anmeldetag: **18.08.88**

(54) **Sonde zum hydraulischen Aufweiten mit Zentriereinrichtung.**

(30) Priorität: **01.09.87 DE 3729169**

(43) Veröffentlichungstag der Anmeldung:
**22.03.89 Patentblatt 89/12**

(45) Bekanntmachung des Hinweises auf die
Patenterteilung:
**06.03.91 Patentblatt 91/10**

(84) Benannte Vertragsstaaten:
**BE CH DE ES FR GB IT LI NL SE**

(56) Entgegenhaltungen:
**EP-A- 0 055 101
EP-A- 0 213 529
FR-A- 2 550 476**

(73) Patentinhaber: **Emitec Gesellschaft für
Emissionstechnologie mbH
Hauptstrasse 150
W-5204 Lohmar 1 (DE)**

(72) Erfinder: **Swars, Helmut
Riedweg 11
CH-5060 Bergisch Gladbach 1 (DE)**

(74) Vertreter: **Neumann, Ernst Dieter, Dipl.-Ing. et
al
HARWARDT NEUMANN PATENTANWÄLTE
Scheerengasse 2 Postfach 1455
W-5200 Siegburg (DE)**

**Beschreibung**

Die vorliegende Erfindung betrifft eine Sonde zum hydraulischen Aufweiten nach dem Oberbegriff des 1. Anspruchs. Aus der EP-A-0 213 529 ist es bekannt, eine Anzahl von Antriebselementen, wie Nocken, Zahnräder oder Lagerschalen in einem Arbeitsgang mittels hydraulischen Aufweitens auf einer Welle zu befestigen, indem in die Hohlwelle eine Sonde eingeschoben wird, die eine entsprechende Anzahl von durch Dichtungen abgegrenzten Wirkungsbereichen aufweist, die durch radiale Bohrungen mit einer im Inneren der Sonde verlaufenden Zuleitung für das Druckfluid in Verbindung stehen. Aus Kostengründen sollen dabei als Hohlwellen Abschnitte handelsüblichen Präzisionsrohres verwendet werden, die herstellungsbedingt geringe, unregelmäßige Toleranzen in der Wanddicke aufweisen. Eine in ein derartiges Rohr eingeführte, ihrerseits nicht notwendigerweise völlig gerade Sonde würde dann auf einem Teil ihrer Länge exzentrisch zum Rohr verlaufen ; abgesehen davon, daß es Schwierigkeiten bereitet, einen in einem derartigen bereich gelegenen Aufweitabschnitt der Sonde durch Aufweiten der Dichtungen bis zu ihrer Anlage an der Rohrinnenoberfläche zuverlässig abzudichten, hat sich gezeigt, daß Teile der Dichtung durch die Aufgabe des zu ihrer Aufweitung dienenden Vordruckes in den einseitig vergrößerten Spalt hineingedrückt und hier abgequetscht werden, was zur vorzeitigen Zerstörung der Dichtung und damit zum Unbrauchbarwerden der Sonde führt. Es ist daher schon vorgeschlagen worden, die Sonde selbst in begrenztem Ausmaß elastisch zu gestalten, so daß sie sich den Unregelmäßigkeiten in der Innenkontur des aufzuweitenden Rohres anpassen kann. Dabei bewegt sich die der Sonde mitzuteilende vorübergehende Biegung im Bereich weniger Zehntel mm.

Aufgabe der vorliegenden Erfindung ist eine weitere Verbesserung einer derartigen, zumindest in Teilbereichen elastischen Sonde dahingehend, daß durch das Vorsehen einer Zentriereinrichtung sichergestellt wird, daß die Sonde über die gesamte Länge des aufzuweitenden Rohres hinweg stets konzentrisch zu diesem angeordnet bleibt, so daß die oben angesprochenen Schwierigkeiten beim Aufweiten der Dichtungen behoben werden.

Die Lösung dieser Aufgabe erfolgt durch die im kennzeichnenden Teil des 1. Anspruchs angegebenen Mittel. Die vorgeschlagenen Zentrierelemente ragen im unbelasteten Zustand über die Innenkontur des Rohres hinaus, laufen jedoch beim Einführen in die Sonde dank geeigneter Anlaufkanten in dieses hinein und werden zusammengepreßt. Die im zusammengepreßten Zustand von ihnen ausgeübte Kraft reicht aus, um die elastische Sonde so zu verbiegen, daß sie in eine konzentrische Stellung zum Rohr gezwungen wird.

Eine im 2. Anspruch vorgeschlagene mögliche Ausgestaltung der Erdindung bietet sich besonders für eine Fertigung der Zentrierelemente aus Federstahlhülsen an, wobei in diese etwa halbkreisförmige Schlitze gestanzt werden und die so gebildeten "Lappen" abwechselnd nach innen und außen bis zur bleibenden Verformung gebogen werden.

Die im 3. Anspruch vorgeschlagene alternative Ausgestaltung der Zentrierelemente erscheint besonders geeignet, wenn diese aus einem Kunststoff hergestellt werden sollen. Dabei ist unerheblich, ob das Material des Zentrierringes bei Aufgabe des vollen, die Aufweitung der gewünschten Rohrabschnitte bewirkenden Drucks derart elastisch verformt wird, daß seine Zentrierwirkung nachläßt : zu diesem Zeitpunkt haben die Dichtungen bereits ihre an der Rohrinnenwand anliegende Endlage erreicht, und die Zentrierung braucht nicht mehr so genau zu sein.

Eine weitere alternative Ausgestaltung der Zentrierelemente als sternförmig radial aus der Sondenkontur hervortretende, federnd gelagerte Stützen wird durch den 4. Anspruch bezeichnet.

Um das Einführen der Sonde in das Rohr zu erleichtern, wird im 5. Anspruch vorgeschlagen, zumindest die in Berührung mit dem Rohr kommenden Federelemente mit einem Überzug aus einem gleitfähigen Kunststoff, z. B. Polytetrafluoräthylen, zu versehen.

Zur weiteren Erleichterung des Einführens der Sonde in das Rohr wird gemäß dem 6. Anspruch vorgeschlagen, die Innenwand des Rohres zu benetzen, so daß sich ein dünner Schmierfilm bildet, auf dem die Federelemente der Zentrierringe besser, und ohne auf der Rohrinnenseite Riefen zu hinterlassen gleiten können. Dabei ist es nicht erforderlich, eine im herkömmlichen Sinne als Schmiermittel bezeichnete Flüssigkeit, z. B. ein Öl, zu verwenden, vielmehr kann, wie im 7. Anspruch vorgeschlagen, das Hydraulikfluid selbst, z. B. Wasser, als Schmierstoff dienen.

Wegen der unvermeidlicherweise, insbesondere bevor die Dichtungen zur Anlage gekommen sind, auftretenden Leckagen an Hydraulikfluid aus den Aufweitabschnitten heraus, muß zur Abfuhr dieser Leckagen eine besondere Ableitung vorgesehen werden.

Gemäß dem 8. Anspruch wird diese Ableitung während des Einführens der Sonde in das Rohr umgekehrt dazu benutzt, die Schmierflüssigkeit, z. B. das Hydraulikfluid, an die Innenoberfläche des Rohres zu bringen.

Ein Ausführungsbeispiel der Erfindung ist in der Zeichnung dargestellt, und zwar zeigt die

Figur 1 einen Teil der erfindungsgemäßen Sonde und des aufzuweitenden Rohres im Längsaxialschnitt entsprechend den Linien I-I der Figuren 2 und 3, die

Figur 2 einen Querschnitt entsprechend der Linie II-II der Figur 1, die

Figur 3 einen weiteren Querschnitt entsprechend der Linie III-III der Figur 1 und die
Figur 4 einen weiteren Querschnitt entsprechend der Linie IV-IV der Figur 1.

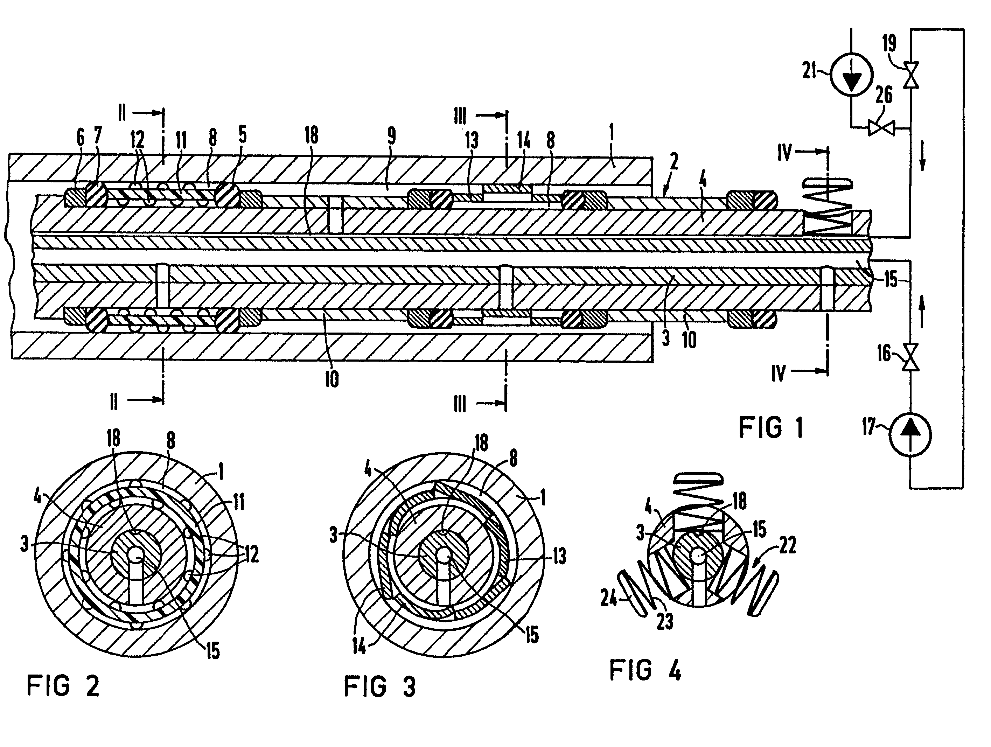

In ein als Hohlwelle dienendes Rohr 1, das in mehreren axialen Abschnitten aufgeweitet werden soll, um darauf hier nicht gezeichnete Antriebselemente (z. B. Nocken) zu befestigen, wird eine Sonde 2 geschoben, die aus einem Kern 3 und einem damit verlöteten oder verklebten Mantel 4 besteht. Die Werkstoffeigenschaften der Sonde 2 sind so gewählt, daß sie in begrenztem Umfange elastisch ist, d. h. sich an kleine Unregelmäßigkeiten in der Geradheit des Rohres 1 anpassen kann. Die aufzuweitenden Abschnitte des Rohres 1 entsprechen Wirkungsbereichen 8 der Sonde 2, die jeweils durch umlaufende Dichtungen 5 begrenzt werden, deren jede aus einem ersten, unelastischen Teil 6 und einem zweiten, aus einem Elastomer hergestellten Teil 7 besteht. In der Mitte der Figur 1 sind die Dichtungen 5 im entspannten Zustand dargestellt, in dem sie einen Spalt zwischen sich und der Innenoberfläche des Rohres 1 freilassen ; im linken Teil dagegen ist der Zustand nach dem Aufweiten der elastischen Teile 7 dargestellt, wodurch der zwischen ihnen gelegene Wirkungsbereich 8 im wesentlichen druckdicht gegenüber den Zwischenbereichen 9 abgesperrt wird, in welchen Bereichen Distanzhülsen 10 für den richtigen Abstand zwischen den verschiedenen Wirkungsbereichen 8 sorgen. Auf der linken Seite der Figur 1 und in der Figur 2 ist eine erste Ausführungsform von ringförmigen Zentrierelementen 11, z. B. aus Kunststoff, dargestellt, die an ihrer Innen- wie Außenoberfläche mit Noppen 12 versehen ist. In der Mitte der Figur 1 und in der Figur 3 ist eine zweite Ausführungsform von ringförmigen Zentrierelementen 13, vorzugsweise aus Federstahl, dargestellt, bei der aus dem Hülsenkörper als Federelement wirkende "Lappen" 14 teilweise ausgestanzt und anschließend abwechselnd nach außen und nach innen gebogen sind. In einer dritten, in der rechten Hälfte der Figur 1 und in der Figur 4 dargestellten Ausführungsform besteht das Zentrierelement 22 aus sternförmig über die Sondenkontur vorstehenden Stützen 24, die durch Druckfedern 23 gleichmäßig auseinandergespreizt werden. Die Elastizität der Zentrierelemente 11, 13, bzw. 22, die im entlasteten Zustand über den Innendurchmesser des Rohres 1 hinausragen, führt dazu, daß sie sich federnd sowohl an dieser Innenseite als auch an der Außenseite bzw. dem Kern der Sonde 2 anlegen und letztere infolge ihrer für diesen Zweck ausreichenden Elastizität im Rohr 1 zentrieren, auch wenn dieses nicht vollständig gerade ist. Über eine im Sondenkern 3 angelegte Zuleitung 15 mit radialen Abzweigungen können die Wirkungsbereiche 8 nach Öffnen eines ersten Ventils 16 (wie auch die folgenden Teile nur schematisch angedeutet) mit Hydraulikfluid beaufschlagt werden, das durch eine erste Pumpe 17 unter Druck gesetzt wird. Bevor die elastischen Teile 7 der Dichtungen 5 unter dem Einfluß eines auf den entsprechenden Wirkungsraum 8 aufgegebenen Vordruckes an der Innenoberfläche des Rohres 1 zur Anlage gekommen sind, sowie durch spätere kleinere Undichtigkeiten an den Dichtungen tritt unvermeidlicherweise ein geringes Quantum an Hydraulikfluid in die Zwischenräume 9 aus, das von hier über eine ebenfalls mit radialen Abzweigungen versehene Ableitung 18 abgeführt und, wenn ein zweites Ventil 19 geöffnet ist, in den Kreislauf des Hydraulikfluids zurückgeführt wird. Vor bzw. beim Einführen der Sonde 2 in das Rohr 1 jedoch wird zweckmäßigerweise das zweite Ventil 19 geschlossen und ein drittes Ventil 26 geöffnet, wodurch mittels einer zweiten Pumpe 21 eine Schmierflüssigkeit, z. B. ebenfalls Hydraulikfluid, in umgekehrter Richtung durch die Ableitung 18 in die Zwischenräume 9 geführt wird. Hier benetzt es die Innenoberfläche des Rohres 1, so daß die Noppen 12 bzw. Federelemente 14 der Zentrierringe 11, 13 leichter an der Rohroberfläche abgleiten können.

**Ansprüche**

1. Elastische Sonde (2) für das abschnittsweise hydraulische Aufweiten von Rohren (1) mit auf der Oberfläche der Sonde paarweise angeordneten, die Wirkungsabschnitte (8) begrenzenden Dichtungen (5), **dadurch gekennzeichnet**, daß zwischen den Dichtungen (5) Zentrierelemente (11, 13, 22) angebracht sind, die an ihrer Innenseite federnd (12, 14) am Sondenkörper (2) anliegen und durch Einführen der Sonde in das Rohr (1) in federnden Kontakt zu dessen Innenoberfläche bringbar sind.

2. Sonde (2) nach Anspruch 1, **dadurch gekennzeichnet**, daß die Zentrierelemente (13) aus ringförmigen Hülsen bestehen, aus denen über ihren Umfang verteilt abwechselnd nach innen und außen gebogene Federelemente (14) vorstehen.

3. Sonde (2) nach Anspruch 1, **dadurch gekennzeichnet**, daß die Zentrierelemente (11) die Form von ringförmigen, aus einem elastischen, an seiner Oberfläche genoppten (12) Werkstoff bestehenden Hülsen haben.

4. Sonde (2) nach Anspruch 1, **dadurch gekennzeichnet**, daß die Zentrierelemente (22) die Form von mehreren, unter Federdruck (23) sternförmig aus der Sonde vorstehenden Stützen (24) haben.

5. Sonde (2) nach Anspruch 2, 3 oder 4, **dadurch gekennzeichnet**, daß die Federelemente (14) mit einem Überzug aus einem gleitfähigen Kunststoff versehen sind.

6. Sonde (2) nach Anspruch 1, **dadurch gekennzeichnet**, daß sie mit Einrichtungen (18, 20, 21) zur Benetzung der Rohrinnenoberfläche (1) mit einer Schmierflüssigkeit versehen ist.

7. Sonde (2) nach Anspruch 6, **dadurch gekenn-**

zeichnet, daß als Schmierflüssigkeit Hydraulikfluid verwendet wird.

8. Sonde (2) nach Anspruch 6 mit Einrichtungen (18) zur Abfuhr der im Betrieb auftretenden Leckage an Hydraulikfluid, **dadurch gekennzeichnet**, daß diese Einrichtungen als die Einrichtungen zur Benetzung der Rohrinnenoberfläche einsetzbar sind.

## Claims

1. A flexible mandrel (2) for hydraulically expanding tubes (1) in portions, having seals (5) which are arranged in pairs on the surface of the mandrel and which limit the effective portions (8), characterised in that between the seals (5) there are attached centring elements (11, 13, 22) whose insides rest resiliently (12, 14) against the mandrel member (2) and which, by introducing the mandrel into the tube (1), may be made to establish resilient contact with its inner face.

2. A mandrel (2) according to Claim 1, characterised in that the centring elements (13) consist of annular sleeves, with circumferentially distributed spring elements (14) alternately bent inwardly and outwardly projecting from the annular sleeves.

3. A mandrel (2) according to Claim 1, characterised in that the centring elements (11) have the shape of annular sleeves consisting of a flexible material whose surface is napped (12).

4. A mandrel (2) according to Claim 1, characterised in that the centring elements (22) have the shape of several supports (24) projecting star-like from the mandrel as a result of spring pressure (23).

5. A mandrel (2) according to Claims 2, 3 or 4, characterised in that the spring elements (14) are provided with a coating consisting of slidable plastics.

6. A mandrel (2) according to Claim 1, characterised in that it is provided with means (18, 20, 21) for moistening the inner tube face (1) with a lubricating fluid.

7. A mandrel (2) according to Claim 6, characterised in that a hydraulic fluid is used as the lubricating fluid.

8. A mandrel (2) according to Claim 6 having means (18) for discharging the hydraulic fluid leakages occurring in operation, characterised in that these means may be used as the means for moistening the inner tube face.

## Revendications

1. Sonde élastique (2) pour l'élargissement hydraulique de tubes (1) par segments avec des joints d'étanchéité (5) disposés par paires sur la surface de la sonde et limitant les segments actifs (8), caractérisée en ce qu'entre les joints d'étanchéité (5) sont disposés des éléments de centrage (11, 13, 22) qui reposent par leur côté interne de façon élastique (12, 14) sur le corps de la sonde (2) et qui, par insertion de la sonde dans le tube (1), peuvent être amenés en contact élastique avec la surface interne du tube.

2. Sonde (2) selon la revendication 1, caractérisée en ce que les éléments de centrage (13) consistent en des manchons annulaires desquels font saillie des éléments de ressort (14) courbés tour à tour vers l'intérieur et vers l'extérieur qui sont répartis sur la périphérie des éléments de centrage.

3. Sonde (2) selon la revendication 1, caractérisée en ce que les éléments de centrage (11) ont la forme de manchons annulaires consistant en un matériau élastique nopé (12) à sa surface.

4. Sonde (2) selon la revendication 1, caractérisée en ce que les éléments de centrage (22) ont la forme de plusieurs appuis (24) qui font saillie de la sonde en formant une étoile sous la pression de ressorts (23).

5. Sonde (2) selon la revendication 2, 3 ou 4, caractérisée en ce que les éléments de ressort (14) sont munis d'un revêtement constitué par une matière plastique capable de glisser.

6. Sonde (2) selon la revendication 1, caractérisée en ce qu'elle est munie de dispositifs (18, 20, 21) pour mouiller la surface interne du tube (1) avec un liquide lubrifiant.

7. Sonde (2) selon la revendication 6, caractérisée en ce qu'on utilise un fluide hydraulique comme liquide lubrifiant.

8. Sonde (2) selon la revendication 6, avec des dispositifs (18) pour l'évacuation des fuites de fluide hydraulique qui se produisent en fonctionnement, caractérisée en ce que ces dispositifs peuvent être utilisés comme dispositifs pour mouiller la surface interne du tube.

FIG 1

FIG 2

FIG 3

FIG 4